# EUROPÄISCHE PATENTSCHRIFT

(11) **EP 0 968 310 B1**
(45) Veröffentlichungstag und Bekanntmachung des Hinweises auf die Patenterteilung: **26.06.2002**
(21) Anmeldenummer: 98921392.1
(22) Anmeldetag: 09.03.1998
(51) Int. Cl.: C14C 3/02, C14C 3/08, C08G 8/04, C08G 8/24

(54) **NEUE PHENOL-KONDENSATIONSPRODUKTE**
NOVEL PHENOL CONDENSATION PRODUCTS
NOUVEAUX PRODUITS DE CONDENSATION A BASE DE PHENOLS

(30) Priorität: 20.03.1997 DE 19711651
(43) Veröffentlichungstag der Anmeldung: 05.01.2000
(73) Patentinhaber: Bayer Aktiengesellschaft, 51368 Leverkusen (DE)
(72) Erfinder: RENNER, Gerd, Friedrich, D-51515 Kürten (DE); TRÄUBEL, Harro, D-51373 Leverkusen (DE); MEISEL, Karlheinrich, D-51519 Odenthal (DE); GASSEN, Karl-Rudolf, D-40882 Ratingen (DE); RIEGELS, Martin, D-42799 Leichlingen (DE)
(86) Internationale Anmeldenummer: EP9801361
(87) Internationale Veröffentlichungsnummer: WO9842877

(56) Entgegenhaltungen:
- DE-A- 3 933 478
- DE-A- 4 002 417
- FR-A- 2 354 383
- GB-A- 2 079 298
- GB-A- 2 235 461
- US-A- 4 297 473
- PATENT ABSTRACTS OF JAPAN vol. 004, no. 100 (P-019), 18. Juli 1980 & JP 55 057841 A (KONISHIROKU PHOTO IND CO LTD), 30. April 1980
- PATENT ABSTRACTS OF JAPAN vol. 005, no. 135 (M-085), 27. August 1981 & JP 56 069193 A (KONISHIROKU PHOTO IND CO LTD), 10. Juni 1981

## Beschreibung

Die Erfindung betrifft Carboxylgruppen-tragende Kondensationsprodukte aus Phenolen und Carbonylverbindungen, ein Verfahren zu ihrer Herstellung und ihre Verwendung als Gerbstoffe und Nachgerbstoffe.

Die Gerbung überführt tierische Häute unter Vernetzung des Kollagens in Leder. Gerbstoffe sind demnach Verbindungen, die die Vernetzung der Kollagenketten bewirken. Eines der wichtigsten Merkmale von Leder ist die gegenüber ungegerbten Häuten erhöhte Schrumpfungstemperatur (z.B. in Form einer verbesserten Heißwasserbeständigkeit) und das weiße Aussehen (nicht transparent, nicht pigmentartig) nach dem Trocknen.

Die heute immer noch dominierende Art der Gerbung ist die Chromgerbung, bei der unter Verwendung von Chrom(III)-verbindungen vernetzend wirkende kovalente Bindungen mit den Carboxylgruppen des Kollagens ausgebildet werden.

Andere bekannte Gerbstoffe sind synthetisch hergestellte organische Gerbstoffe, sogenannte Syntane; dabei handelt es sich um Phenol/Aldehyd-Kondensationsprodukte, in die zwecks Erhöhung der Löslichkeit in Wasser Sulfonsäuregruppen eingeführt worden sind. Zusätzlich zu anorganischen Gerbstoffen (z.B. Chrom(III)-salzen) eingesetzt, wirken die Syntane nicht nur gerbend, sondern auch füllend. Aufgrund dieser Eigenschaft verwendet man Syntane zur Nachgerbung vorgegerbter (im allgemeinen chromgegerbter) Leder; man erreicht dadurch ein Optimum an Färbeverhalten, Egalität, Griff und Fülle.

Eine wichtige Ergänzung der gebräuchlichen Nachgerb mittel stellen Carboxylgruppen-haltige Poly(meth)acrylate dar, die keine eigene Gerbwirkung entfalten (DE-OS 27 55 087, US-PS 2 205 883 und 2 205 901). Sie dienen - meist in Kombination mit Syntanen - der Fixierung von Chromgerbstoffen, weil ihre Carboxylgruppen mit Chrom(III)-ionen in Wasser schwerlösliche polymere Mehrkernkomplexe bilden können (DE-OS 26 26 430 und 27 55 087); sie führen auch zu guter Fülle. Allerdings ist ihre Verwendung auch mit Nachteilen verbunden. Die Eindringtiefe von Farbstoffen und die Farbtiefe gefärbter Leder lassen manche Wünsche offen.

Viele Gerbstoffe ziehen nur mäßig auf das Leder auf, so daß die unverbrauchten Anteile in das Abwasser von Lederfabriken gelangen. Weder vegetabilische Gerbstoffe noch Syntane noch polymere Gerbstoffe lassen sich in Kläranlagen biologisch gut abbauen; die Abwässer von Lederfabriken sind daher mit diesen Produkten belastet.

Überraschenderweise wurde nun gefunden, daß bestimmte Carboxylgruppen-tragende Kondensationsprodukte aus Phenolen und Carbonylverbindungen gerbend und nachgerbend wirken, wobei Leder erhalten werden, welche bezüglich Egalität, Griff, Fülle und Fixierung des Gerbstoffs die üblichen Sulfongruppen tragenden Syntane erreichen oder übertreffen. Die Kondensationsprodukte sind biologisch abbaubar; die Kombination von hohem Aufzugsvermögen und biologischer Abbaubarkeit trägt dazu bei, daß die restlichen Gerbflotten ökologisch verträglicher sind als die von Syntanen. Darüber hinaus brauchen Leder, die mit den erfindungsgemäßen Kondensationsprodukten vollgegerbt worden sind, keine Schwermetallionen zu enthalten, so daß die beim Spalten des Leders entstehenden Falzspäne einem erweiterten Anwendungsbereich zugefiihrt werden können.

Gegenstand der Erfindung sind also Kondensationsprodukte mit einem Carboxylgruppengehalt von 12 bis 36, vorzugsweise 12 bis 32, insbesondere 13 bis 24 Gew.-%, bezogen auf Kondensationsprodukt, und einem als Zahlenmittel bestimmten Molekulargewicht von 200 bis 3 000, vorzugsweise von 300 bis 1 500, erhältlich durch Kondensation von
(A) mindestens einem Phenol mit 1 bis 2 phenolischen Hydroxylgruppen und
(B) mindestens einer kondensationsfähigen C₁-C₁₂-, vorzugsweise C₁-C₆-Carbonylverbindung,
wobei die Ausgangsprodukte A und/oder B mindestens teilweise Carboxylgruppen - vorzugsweise direkt an aromatische Ringe gebunden - tragen.

Bevorzugte Ausgangsprodukte A umfassen
(i) Carboxylgruppen-freie Phenole, Naphthole und Kresole sowie deren durch Substitution erhältlichen Derivate, wie z.B. unsubstituiertes Phenol selbst, α-und β-Naphtol, Brenzcatechin, Resorcin, Hydrochinon, o-, m- und p-Kresol, und
(ii) Carboxylgruppen-tragende Phenole, Naphthole und Kresole mit 7 bis 13 C-Atomen wie z.B. Salicylsäure, 3- und 4-Hydroxybenzoesäure, 3- und 4-Hydroxyphthalsäure, Dihydroxybenzoesäuren, 2- und 3-Hydroxyterephthalsäure, 2,5-Dihydroxyterephthalsäure, 4-Hydroxy-1,3-benzoldicarbonsäure, 4,6-Dihydroxy-1,3-benzoldicarbonsäure, 2-, 3-, 4-, 5- und 8-Hydroxynaphthalin-1-carbonsäure, 1- und 3-Hydroxynaphthalin-2-carbonsäure, 3,5-Dihydroxynaphthalin-2-carbonsäure, 4,4'-Dihydroxy-(1,1'-biphenyl)-2-carbonsäure und durch Substitution und/oder Veresterung der genannten Verbindungen erhältliche Derivate.

Bevorzugte Ausgangsprodukte B umfassen Aldehyde und Ketone, wie z.B. Formaldehyd, Acetaldehyd, Glutardialdehyd, Benzaldehyd, einschließlich der Aldehydcarbonsäuren, wie z.B. Glyoxylsäure, und Ketocarbonsäuren, wie z.B. Brenztraubensäure, Acetessigsäure und Lävulinsäure.

Die Kondensationsprodukte enthalten die Ausgangsprodukte A und B im allgemeinen in einem Molverhältnis von 1,8 bis 2,2, vorzugsweise 1,9 bis 2,1, einkondensiert.

Die Zahl der phenolischen Hydroxylgruppen im Kondensationsprodukt liegt in der Regel im Bereich von 0,8 bis 1,2, vorzugsweise 0,9 bis 1,1 Hydroxylgruppen pro aromatischem Ringsystem.

Die Anzahl der Carboxylgruppen im Kondensationsprodukt liegt vorzugsweise im Bereich von 0,2 bis 1,5 Carboxylgruppe pro aromatischem Ringsystem. Die Carboxylgruppen sind vorzugsweise direkt an einen aromatischen Ring gebunden, können aber auch Bestandteil des Brückenglieds zwischen den aromatischen Ringen sein. Bevorzugte Brücken sind Methylengruppen -CH₂- und Hydroxymethylengruppen -CH(OH)-; eine Bindung aromatischer Kerne untereinander über Estergruppen -COO- ist vorzugsweise ausgeschlossen.

Die erfindungsgemäßen Kondensationsprodukte besitzen einen Gehalt an Sulfonsäureplus Sulfonatgruppen von unter 1 Gew.-%, bezogen auf Kondensationsprodukte, sind vorzugsweise frei von Sulfonsäure- und Sulfonatgruppen; sie besitzen vorzugsweise auch weniger als 0,1 Gew.-%, bezogen auf Kondensationsprodukte, an aromatische Ringe gebundene Aminogruppen.

Salicylsäure/Phenol/Formaldehyd-Kondensationsprodukte mit einem Molverhältnis Salicylsäure/Phenol von 0,7 bis 1,4, vorzugsweise 0,9 bis 1,1, und Phenol/Glyoxylsäure-Kondensationsprodukte mit einem Molverhältnis Phenol/Glyoxylsäure von 1,8 bis 2,2, vorzugsweise 1,9 bis 2,1, sind besonders bevorzugt.

Erfindungsgemäße Kondensationsprodukte mit besonders hohem Carboxylgruppengehalt lassen sich beispielsweise aus Carboxylgruppen-haltigen Phenolen (z.B. Salicylsäure/Phenol-Mischungen) und Carboxylgruppen-freien Aldehyden, z.B. Formaldehyd, dadurch herstellen, daß man bis zu 50 Mol-%, vorzugsweise bis zu 30 Mol-% der Carboxylgruppen-freien Aldehyde durch Carboxylgruppen-haltige Aldehyde, z.B. Glyoxylsäure, ersetzt.

Bis zu 20 Mol-% der Phenole A können durch Harnstoff ersetzt werden.

Die Ausgangsprodukte A und B können in An- oder Abwesenheit von Katalysatoren kondensiert werden, wie dies beispielsweise für Phenol/Aldehyd-Kondensationsprodukte in Methoden der Organischen Chemie (Houben-Weyl), Bd. 14/2, Georg Thieme Verlag, Stuttgart 1963, S. 193 ff. beschrieben ist. So können die Ausgangsprodukte in Substanz oder in wäßriger Phase bei Temperaturen von vorzugsweise 60 bis 160°C (in wäßriger Phase: von 60 bis 110°C) umgesetzt werden. Säuren, z.B. Schwefelsäure, p-Toluolsulfonsäure, Chlorsulfonsäure, C₁-C₆-Carbonsäuren und Basen, z.B. Alkalihydroxide, vorzugsweise in Form ihrer wäßrigen Lösungen, sind bevorzugte Katalysatoren. Das während der Reaktion entstehende Kondensationswasser kann, wenn man in Substanz arbeitet, während oder nach der Reaktion abdestilliert werden.

Besonders bevorzugte Kondensationsprodukte enthalten weniger als 1 Gew.-% freies Phenol A, bezogen auf Kondensationsprodukte. Solche Produkte lassen sich beispielsweise auf folgenden Wegen herstellen (gezeigt am Beispiel Phenol/Salicylsäure/Formaldehyd):
a) Durch Vorkondensation von Salicylsäure und Formaldehyd bei einem pH-Wert von 3 bis 5, vorzugsweise etwa 4, bei 100 bis 130°C, gegebenenfalls unter Druck, Ansäuern mit einer Säure, wie z.B. Schwefelsäure oder Carbonsäuren, auf einen pH-Wert von 0 bis 3, Zugabe von Phenol und weitere Kondensation;
b) Kondensation von Phenol und Formaldehyd bei einem pH-Wert von 3 bis 5, vorzugsweise etwa 4, bei 90 bis 130°C bis zum Hydroxyphenylbenzylalkohol, Zugabe von Salicylsäure und weitere Kondensation; und
c) Kondensieren einer Mischung aus Phenol/Salicylsäure/Formaldehyd bei 90 bis 110°C, wobei das Phenol bevorzugt reagiert; nach etwa 2 Stunden wird der pH-Wert durch Zugabe einer Base, wie z.B. Natronlauge, auf einen pH-Wert von 3 bis 5, vorzugsweise etwa 4, gebracht und zu Ende kondensiert.

Die erfindungsgemäßen Kondensationsprodukte können mit üblichen Lederhilfsmitteln gemischt eingesetzt werden. Zu diesen üblichen Lederhilfsmitteln zählen beispielsweise Naturprodukte wie Eiweißhydrolysate, Gelatine, Zucker, Stärke, Eigelb, Kasein, Mehl, halbsynthetische Produkte wie sulfatierte oder sulfonierte Fettstoffe und Wachse und synthetische Stoffe wie beispielsweise Polyasparaginsäure.

Die Vollgerbung mit den erfindungsgemäßen Kondensationsprodukten als alleinigem Gerbstoff ist bevorzugt. Natürlich können auch andere Gerbstoffe mitverwendet werden, wenn man deren Eigenschaftsbild tolerieren kann.

Die erfindungsgemäßen Kondensationsprodukte können in Mengen von 0,1 bis 30, vorzugsweise 0,5 bis 12, insbesondere 1 bis 8, Gew.-% (bezogen auf Blößengewicht; im Falle der Nachgerbung: bezogen auf Falzgewicht) eingesetzt werden.

Weiterer Gegenstand der Erfindung sind also die Verwendung der Kondensationsprodukte zum Gerben und unter Verwendung der Kondensationsprodukte gegerbte Leder.

Beim Gerben und Nachgerben können die erfindungsgemäßen Gerbstoffe in Kombination mit anderen Gerbstoffen, vorzugsweise im Gewichtsverhältnis 1:9 bis 9:1, verwendet werden. Beispiele anderer Gerbstoffe sind mineralische Gerbstoffe wie Chrom-, Zirkon-, Aluminium- und Titanverbindungen, Vegetabilgerbstoffe und andere synthetische organische Gerbstoffe einschließlich der Harzgerbstoffe. Beispiele solcher anderer Gerbstoffe werden in der folgenden Literatur beschrieben: F. Schade und H. Träubel, "Neuere Entwicklungen auf dem Gebiet der synthetischen organischen Gerbstoffe", Das Leder 33 (1982), 142-154; H. Träubel und K.-H. Rogge, "Retannage and Retanning Materials", JALCA 83 (1988), 193-205; K. Faber, "Gerbmittel, Gerbung und Nachgerbung", Bd. 3 in H. Herfeld, Bibliothek des Leders, Frankfurt 1984; EP-A 118 023, 372 746, DE-OS 3 931 039.

Darüber hinaus können zur Verbesserung der Eigenschaften weitere, bevorzugt biologisch verträgliche Stoffe zugesetzt werden. Die Gerbstoffe und Nachgerbstoffe können mit Fettungsmitteln und Hydrophobierungsmitteln zusammen oder unmittelbar nacheinander eingesetzt werden; vgl. z.B. M. Hollstein, "Entfetten, Fetten und Hydrophobieren bei der Lederherstellung", Bd. 4 in H. Herfeld, Bibliothek des Leders, Frankfurt 1984. Den erfindungsgemäßen Gerbstoffen können andere, bevorzugt biologisch verträgliche Stoffe zugesetzt sein.

### Solche Stoffe können sein:

Kohlenhydrate, wie z.B. Glucose, Saccharose, Fructose, Maltose, Getreidemehl etc., in der Papierherstellung anfallende Produkte mit gerbender Wirkung, wie z.B. Sulfitablauge oder ihre Inhaltsstoffe, Stoffe, die komplexierende Eigenschaften besitzen, wie z.B. Iminobernsteinsäure und ihre Derivate, Zitronensäure und ihre Salze. Salicylsäurehaltige Verbindungen können mit Schwermetallionen, insbesondere mit Eisenionen, gefärbte Komplexe bilden. Durch Zusatz von Komplexbildnern kann diese unerwünschte Farbreaktion unterdrückt werden.

Auch anorganische Stoffe wie Talkum etc., Salze wie Na-chlorid, Na-sulfat, Naacetat u.a. können zugesetzt werden. Üblicherweise werden die beanspruchten Gerbstoffe unmittelbar vor der Färbung angewandt.

Man kann diese Gerbstoffe in Kombination mit Vegetabilgerbstoffen auch zur Herstellung von Vegetabilledern verwenden.

Die Prozentangaben der nachfolgenden Beispiele beziehen sich jeweils auf das Gewicht.

### Beispiele

### Beispiel 1

Zu 141,2 g Phenol werden innerhalb 15 Minuten 111,0 g Glyoxylsäure-Hydrat (50 %ig) bei 110 bis 120°C zudosiert. Anschließend wird die Temperatur auf 140°C gesteigert, wobei gleichzeitig Wasser abdestilliert wird. Diese Mischung wird in 360,0 g Wasser und 80,0 g Natronlauge (50 %ig) bei 80 bis 90°C gelöst und mit 141,2 g Phenol versetzt. In 30 Minuten werden bei 100 bis 105°C 142,5 g Formaldehyd (30 %ig) zudosiert und 4 Stunden bei dieser Temperatur gerührt. Die Reaktionsmischung wird anschließend mit einer Lösung aus 75,4 g Phthalsäureanhydrid, 77,2 g Natronlauge (50 %ig) und 262,5 g Wasser versetzt und der pH-Wert des Ansatzes mit Salzsäure auf 5 bis 6,5 eingestellt. Die Konzentration des Endproduktes beträgt etwa 40 %.

### Beispiel 2

Eine Mischung aus 345,3 g Salicylsäure in 440,0 g Wasser und 120,0 g Natronlauge (50 %ig) wird auf 80°C erwärmt, und dazu werden 235,3 g geschmolzenes Phenol gegeben. Die Temperatur wird auf 100°C gesteigert, innerhalb 10 Minuten werden 237,5 g Formaldehyd (30 %ig) zudosiert und 5 Stunden bei 100 bis 105°C gerührt. Die Reaktionsmischung wird anschließend mit 229,0 g Wasser versetzt und der pH-Wert des Ansatzes mit Natronlauge auf 5 bis 6 eingestellt. Die Konzentration des Endproduktes beträgt etwa 40 %.

### Beispiel 3

Eine Mischung aus 279,0 g Salicylsäure, 189,2 g Phenol, 400,0 g Wasser und 32,0 g Natriumhydroxid wird auf 100°C erwärmt und dazu werden 202,7 g Formaldehyd (30 %ig) gegeben. Die Temperatur wird 3 Stunden auf 100°C-105°C gebracht, danach werden 100 ml Ameisensäure und 20,2 g Formaldehyd zudosiert und weitere 5 Stunden bei 100-105°C gerührt. Die Reaktionsmischung wird anschließend mit 12,5 g Natriumhydroxid versetzt. Nach 2 Stunden werden 20 g Harnstoff zugesetzt und der pH-Wert des Ansatzes mit Natronlauge auf 5-6 eingestellt. Die Konzentration des Endproduktes beträgt in diesem Fall etwa 40 %.

### Beispiel 4

Eine Mischung aus 345,3 g Salicylsäure in 440,0 g Wasser und 120,0 g Natronlauge (50 %ig) wird auf 80°C erwärmt, und dazu werden 235,3 g geschmolzenes Phenol gegeben. Die Temperatur wird auf 100°C gesteigert, und innerhalb 10 Minuten werden 237,5 g Formaldehyd (30 %ig) zudosiert und 5 Stunden bei 100 bis 105°C gerührt. Die Reaktionsmischung wird anschließend mit 545,0 g Wasser und 215,0 g Polyasparaginsäure versetzt und der pH-Wert des Ansatzes mit Natronlauge auf 5 bis 6 eingestellt. Die Konzentration des Endproduktes beträgt etwa 40 %.

Folgende Beispiele sollen stellvertretend für die Anwendung der erfindungsgemäßen Gerbstoffe stehen:

### Anwendungsbeispiel 1

Nachgerbung:
Chromgegerbtes Rindleder (wet blue) wird mit 1,3 % Cr₂O₃-Angebot gegerbt, auf ca. 1,6 bis 1,7 mm Stärke gefalzt (falzfeucht) und in Stücke (ca. 70 bis 80 g) aufgeteilt. Die nachfolgenden Prozentangaben beziehen sich auf das Falzgewicht. Das gewogene Leder (Falzgewicht) wird 10 Minuten in fließendem Leitungswasser gespült. Danach werden 150 % Wasser, 1 % Natriumformiat und 0,1 bis 0,2 % Natriumbicarbonat vorgelegt und das Leder zur Neutralisation zugegeben. 30 Minuten läßt man im Drehkreuz bei 40°C walken. Danach wird das Leder 5 Minuten in fließendem Leitungswasser gespült und in eine Mischung aus 100 % Leitungswasser und 5 % (bezogen auf Festsubstanz) des Gerbstoffes aus Beispiel 2 gegeben. Bei 40°C wird 120 Minuten lang gewalkt. Anschließend wird das Leder 5 Minuten gespült, ausgestoßen, luftgetrocknet, klimatisiert und gestollt.
Das Leder besitzt einen guten Griff bei guter Fülle. Die Färbbarkeit des fertigen Leders ist wesentlich besser als bei Verwendung vergleichbarer Syntane auf Basis sulfierter Kondensationsprodukte mit phenolischen OH-Gruppen.

### Anwendungsbeispiel 2

Alleingerbung:
25 g (bezogen auf Festsubstanz) des Gerbstoffes aus Beispiel 2 werden in 100 ml Leitungswasser gegeben und mit einer wäßrigen Lösung eines Essigsäure/Ameisensäure-Gemisches (135 g Essigsäure/120 g Ameisensäure, 85 %ig) auf 1 000 ml aufgefüllt. Mit KOH wird auf Säurezahl 120/100 eingestellt. Die Hälfte dieser Gerblösung wird zu einem 100 g Stück Fresserblöße (normal geäschertes Hautmaterial von Fresserfellen) in 300 ml Wasser gegeben, und es wird etwa 20 bis 24 Stunden im Drehkreuz bei Raumtemperatur gewalkt. Danach wird die zweite Hälfte zugegeben und weitere 48 Stunden gewalkt. Anschließend wird das Leder 10 Minuten gespült, ausgestoßen, auf der Narbenseite mit 8 ml einer Fettemulsion eines handelsüblichen Lederfettungsmittels eingerieben und luftgetrocknet.
Der eingesetzte Gerbstoff zeigt gute gerberische Eigenschaften.

## Patentansprüche

1. Kondensationsprodukte mit einem Carboxylgruppengehalt von 12 bis 36 Gew.-%, bezogen auf Kondensationsprodukte, und einem als Zahlenmittel bestimmten Molekulargewicht von 200 bis 3 000, erhältlich durch Kondensation von
(A) mindestens einem Phenol mit 1 bis 2 phenolischen Hydroxylgruppen und
(B) mindestens einer kondensationsfähigen C₁-C₁₂-Carbonylverbindung,
wobei die Ausgangsprodukte A und/oder B mindestens teilweise Carboxylgruppen tragen.

2. Kondensationsprodukte nach Anspruch 1 mit einem als Zahlenmittel bestimmten Molekulargewicht von 300 bis 1 500.

3. Kondensationsprodukte nach Anspruch 1, wobei die Ausgangsprodukte die Carboxylgruppen direkt an einen aromatischen Ring gebunden enthalten.

4. Verwendung der Kondensationsprodukte nach Ansprüchen 1 bis 3 als Gerbstoffe.

5. Unter Verwendung der Kondensationsprodukte nach Ansprüchen 1 bis 3 gegerbte Leder.

## Claims

1. Condensation products having a carboxyl group content of from 12 to 36% by weight, based on condensation products, and a number-average molecular weight of from 200 to 3000, obtainable by condensation of
(A) at least one phenol having 1 to 2 phenolic hydroxyl groups
and
(B) at least one condensable C₁-C₁₂-carbonyl compound,
the starting products A and/or B carrying, at least in part, carboxyl groups.

2. Condensation products according to Claim 1 having a number-average molecular weight of from 300 to 1500.

3. Condensation products according to Claim 1, where the starting products contain the carboxyl groups attached directly to an aromatic ring.

4. Use of the condensation products according to Claims 1 to 3 as tanning agents.

5. Leathers tanned using the condensation products according to Claims 1 to 3.

## Revendications

1. Produits de condensation avec une teneur en groupe carboxyle comprise entre 12 et 36 % en poids, rapportés aux produits de condensation, et un poids moléculaire moyen en nombre compris entre 200 et 3 000, pouvant être obtenu par condensation de
(A) au moins un phénol avec de 1 à 2 groupes hydroxyle phénoliques et
(B) au moins un composé carbonyle en C₁-C₁₂ pouvant être condensé,
les produits de départ A et/ou B portant au moins partiellement des groupes carboxyle.

2. Produits de condensation selon la revendication 1 avec un poids moléculaire moyen en nombre compris entre 300 et 1 500.

3. Produits de condensation selon la revendication 1, les produits de départ contenant les groupes carboxyle directement liés à un cycle aromatique.

4. Utilisation des produits de condensation selon les revendications 1 à 3 comme tannins.

5. Cuir tanné en utilisant les produits de condensation selon les revendications 1 à 3.
